# EUROPÄISCHE PATENTANMELDUNG

(11) **EP 2 056 026 A2**
(43) Veröffentlichungstag der Anmeldung: **06.05.2009**
(21) Anmeldenummer: 08000248.8
(22) Anmeldetag: 09.01.2008
(51) Int. Cl.: F24D 11/00

(54) **Erdgedeckter externer Wärmespeicher**

(30) Priorität: 05.11.2007 DE 202007015474 U
(71) Anmelder: GAM Holding GmbH, 57339 Erndtebrück (DE)
(72) Erfinder: Bechyne, Karel, 25726 Vsechlady 6 (CZ)
(74) Vertreter: Walkenhorst, Andreas

(57) **Zusammenfassung**

Dezentraler Wärmespeicher (16) zur Aufnahme von mit Sonnenenergiekollektoren (12, 22) aus Sonnenenergie gesammelter Wärmeenergie. Die Sonnenenergiekollektoren (12, 22) sind mit einem externen Wärmespeicher (16) leitungsverbunden. Als externer Wärmespeicher (16) dient dabei ein Flüssiggastank, der an Stelle von Flüssiggas mit Wasser gefüllt ist. Der externe Wärmespeicher (16) ist ein von den Sonnenenergiekollektoren (12, 22) entfernt aufgestellter, erdgedeckter Druckbehälter, der Wasser als Wärmespeichermedium (17) beinhaltet.

## Beschreibung

Die vorliegende Erfindung betrifft einen dezentralen Wärmespeicher zur Aufnahme von mit Sonnenenergiekollektoren aus Sonnenenergie gesammelter Wärmeenergie.

Zur dezentralen Energiegewinnung aus Sonnenenergie sind Solaranlagen allgemein bekannt. Die Energiegewinnung erfolgt dabei durch Sonnenenergiekollektoren, die beispielsweise auf Gebäudedächern oder anderen, der Sonneneinstrahlung zugänglichen Aufstellorten angebracht worden sind.

Sonnenenergiekollektoren sind beispielsweise von einem liquiden Wärmeträgermedium, vorzugsweise Wasser, durchströmte Schläuche, die in einer Vielzahl von Windungen über bestimmte Areale eines Gebäudedaches oder andere geeignete Aufstellorte geführt werden.

Bei der Durchströmung wird das Wärmeträgermedium von der Sonneneinstrahlung erwärmt. Das erwärmte Wärmeträgermedium, nämlich Wasser, wird in Wasserspeichern gesammelt und im Bedarfsfall als Brauchwasser, beispielsweise zu Heizzwecken, zum Duschen oder zum Waschen oder sonstigen Zwecken im häuslichen Bereich bereitgehalten. Nachteilig ist, dass die Warmwasserspeicherung im Gebäude räumlich und mengenmäßig begrenzt ist.

Eine andere Möglichkeit der Energiegewinnung aus Sonnenlicht sind so genannte Solarzellen, in denen die quasi unbegrenzt zur Verfügung stehende Solarenergie in elektrische Energie umgewandelt wird. Problematisch dabei ist, dass die gewonnene elektrische Energie nicht oder nur mit relativ großem Aufwand gespeichert werden kann. Abgesehen davon, sind beide Maßnahmen zur Energiegewinnung von der Licht- bzw. Sonneneinstrahlung abhängig und unterliegen einem Tag- und Nachtrhythmus.

Aufgabe der vorliegenden Erfindung ist es, eine vom jeweiligen vorhandenen Raumangebot unabhängige, erweiterte, preiswerte Speichermöglichkeit für durch Solarenergie gewonnene Wärmeenergie zu schaffen.

Gelöst wird diese Aufgabe durch die Maßnahmen des Anspruches 1, insbesondere durch einen extern aufgestellten und mit den Sonnenenergiekollektoren leitungsverbundenen Wärmespeicher, der Wärmespeicher ein erdgedeckter Flüssiggastank ist, der an Stelle von Flüssiggas ein liquides Wärmeträgermedium beinhaltet, wobei das liquide Wärmeträgermedium vorzugsweise Wasser ist.

Gemäß einer besonders bevorzugten Ausführung ist es vorgesehen, dass das liquide Wärmeträgermedium und Medium zur Übertragung der Wärmeenergie auf den Wärmespeicher Wasser ist.

Bei einer anderen bevorzugten Ausführung ist es vorgesehen, dass das Medium zur Übertragung der Wärmeenergie auf den Wärmespeicher elektrischer Strom ist.

Gemäß einer besonders bevorzugten Ausführung ist es vorgesehen, dass der externe Wärmespeicher für das Wärmeträgermedium mit einer Korrosion verhindernden Innenbeschichtung versehen ist.

Bei einer weiteren bevorzugten Ausführung des erfindungsgemäßen Wärmespeichers ist es vorgesehen,
dass der mit einem liquiden Wärmeträgermedium gefüllte, erdgedeckt aufgestellte externe Wärmespeicher mit einer Wärmedämmung versehen ist.

Durch diese Maßnahme können Wärmespeicher vom Raumangebot in dem jeweiligen, zu versorgenden Gebäude quasi unbegrenzter Größe eingesetzt werden. Dadurch kann ein optimales Verhältnis zwischen Volumen und Behälteroberfläche angestrebt werden, bei dem die Wärmeabgabe durch eine Wärmedämmung so gering wie möglich gehalten wird.

Eine weitere Verringerung der Wärmeabstrahlung an die Umgebung wird durch die erdgedeckte Aufstellung erreicht. Das Wärmespeichermedium erkaltet dadurch langsamer und die gespeicherte Wärme kann länger zur Verfügung gestellt werden.

Besonders erfinderisch ist die Verwendung eines an sich bekannten Druckbehälters für die Lagerung von Flüssiggas als externer Wärmespeicher, der an Stelle von Flüssiggas ein liquides Wärmeträgermedium beinhaltet, der Wärmespeicher mit Sonnenenergiekollektoren leitungsverbundenen ist und die von den Sonnenenergiekollektoren gesammelte Sonnenenergie in dem Wärmespeicher extern gespeichert wird. Ein solcher Druckbehälter wird beispielsweise in der DE 297 13 984 U1 beschrieben.

Durch die erfindungsgemäßen Maßnahmen wird ein Wärmespeicher geschaffen, in dem die gewonnene Sonnenenergie unabhängig von dem Raumangebot eines Gebäudes als Wärmeenergie gespeichert werden kann. Durch ein optimales Verhältnis von Volumen zu Oberfläche ist die Wärmeabgabe an die Umgebung denkbar gering, wobei durch die erdgedeckte Aufstellung eine Wärmeabgabe zusätzlich vermindert wird. Dadurch ist ein sehr geringer Unterschied zwischen Tag und Nacht erreichbar.

Bei einer weiteren bevorzugten Ausführung des erfindungsgemäßen Wärmespeichers ist es vorgesehen, dass zwischen den Sonnenenergiekollektoren und dem leitungsverbundenen, externen Wärmespeicher ein liquides Wärmeträgermedium zirkuliert.

Bei einer anderen Ausführungsform des erfindungsgemäßen Wärmespeichers ist es vorgesehen, dass in dem externen Wärmespeicher ein Wärmetauscher angeordnet ist, dem eine elektrische Heizung zugeordnet ist, die mit von Sonnenenergiekollektoren gewonnenem Solarstrom betrieben wird. Durch diese Maßnahmen kann der gewonnene Solarstrom vor Ort in Wärmeenergie umgewandelt und als solche mit relativ geringen Verlusten unabhängig von der Witterung und der Sonneneinstrahlung gespeichert werden.

Die Wärmespeicherung kann bei einer Schlauchausführung durch direkte Erwärmung des Brauchwassers für Waschzwecke und dergleichen erfolgen. Bei der Ausführung mit Sonnenkollektoren kann die elektrisch erzeugte Energie über in den erdgedeckt aufgestellten Wärmespeicher integrierte Heizwendel erfolgen. Der Wasserkreislauf kann dabei geschlossen über beispielsweise Heizkörper in dem Gebäude vorgenommen werden.

Weitere vorteilhafte Maßnahmen sind in den Unteransprüchen angegeben. Die Erfindung wird im Folgenden anhand einer beispielhaften Ausführungsform unter Bezugnahme auf die beigefügte Zeichnung näher erläutert. Es zeigt:
- **Figur 1**: die schematische Darstellung eines Gebäudes mit auf seinen Dachflächen angebrachten Sonnenenergiekollektoren, die mit einem außerhalb des Gebäudes erdgedeckt aufgestellten externen Wärmespeicher leitungsverbunden sind;
- **Figur 1a**: die Detaildarstellung eines erdgedeckt aufgestellten, als externer Wärmespeicher dienenden Wassertanks;
- **Figur 2**: die Detaildarstellung eines mit Schlauchwindungen versehenen Solarabsorbers als Sonnenenergiekollektor zur Wassererwärmung; und
- **Figur 3**: die Detaildarstellung einer mit Solarzellen versehenen Photovoltaikanlage als Sonnenenergiekollektor.

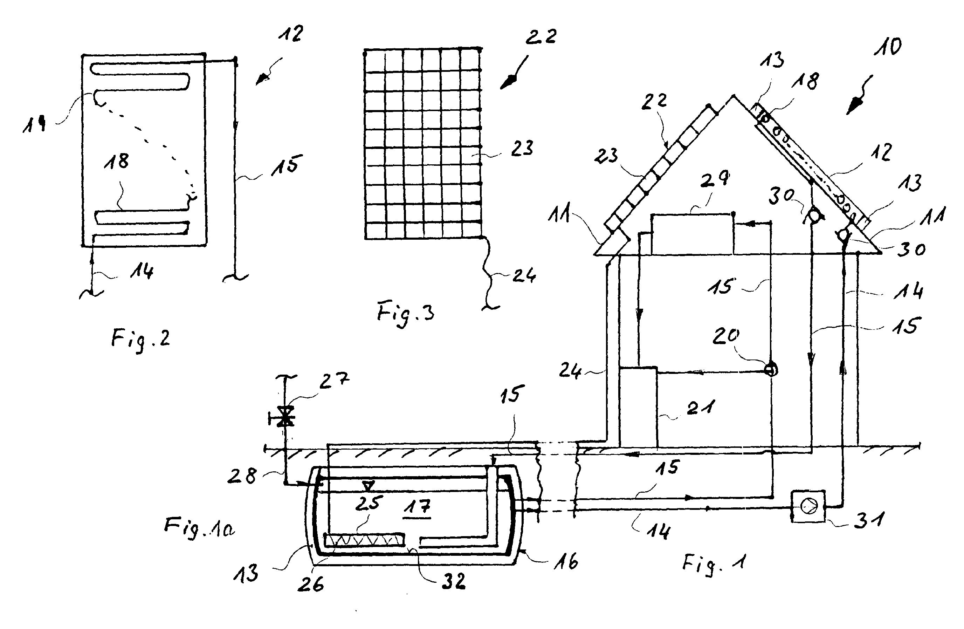

Das in der Figur 1 dargestellte Gebäude 10 ist auf seinen Dachflächen 11 mit Sonnenenergiekollektoren in Form von thermischen Solarabsorbern 12 der unterschiedlichsten Bauart ausgerüstet. Die Solarabsorber 12 sind mit einer Wärmedämmung 13 versehen und über eine Zuleitung 14 und eine Ableitung 15 mit einem externen Wärmespeicher 16 verbunden. Der Wärmespeicher 16 ist erdgedeckt aufgestellt, das heißt er ist unterirdisch im Erdreich eingegraben, und beinhaltet ein flüssiges Wärmeträgermedium 17, vorzugsweise Wasser.

Als Wärmespeicher 16 wird beispielsweise ein aus der DE 297 13 984 U1 an sich bekannter Druckbehälter für die Lagerung von Flüssiggas verwendet. Anstelle von Flüssiggas beinhaltet der Wärmespeicher 16 Wasser als liquides Wärmeträgermedium 17, das von der Solarabsorberanlage 12 erwärmt wird.

In der Figur 2 ist ein thermischer Solarabsorber 12 im Detail dargestellt, in dem ein von dem Wärmeträgermedium 17 durchströmter Schlauch 18 in Schlauchwindungen 19 verläuft. Über die Zuleitung 14 kommt kaltes Wärmeträgermedium 17 in den Schlauch 18, das in den Schlauchwindungen 19 durch von der Sonne kommende Energieeinstrahlung erwärmt wird. Das Medium zur Übertragung der gesammelten und gewonnenen Wärmeenergie auf den Wärmespeicher 16 ist hierbei Wasser.

Das erwärmte Wärmeträgermedium 17 wird über die warme Ableitung 15 in den entfernt von dem Gebäude 10 aufgestellten externen Wärmespeicher 16 geleitet und kann dort als warmes Wasser gespeichert werden. Im Bedarfsfall kann das warme Wasser beispielsweise über einen Dreiwegehahn 20 an diverse Verbraucher 21, beispielsweise Heizkörper, Sanitäranlagen, Duschen und so weiter geliefert werden. Hier kühlt es sich ab und wird über die kalte Zuleitung 14 wieder zurück an die Solarabsorber 12 gefördert.

In der Figur 3 ist als eine andere Ausführung ein Solarenergiekollektor in Form einer Photovoltaikanlage 22 dargestellt. Die Photovoltaikanlage 22 besteht aus einer Vielzahl von Solarzellen 23, die auch ohne direkte Sonnenlichteinstrahlung Sonnenenergie in elektrischen Strom umwandeln können. Dieser elektrische Strom wird über eine elektrische Leitung 24 an den von dem Gebäude 10 unabhängigen erdgedeckt aufgestellten Wärmespeicher 16 geleitet. Das Medium zur Übertragung der gesammelten und gewonnenen Wärmeenergie auf den Wärmespeicher 16 ist hierbei elektrischer Strom.

In der Figur 1a ist der mit dem Gebäude 10 über die Leitungen 14 und 15 verbundene Wärmespeicher 16 im Detail dargestellt. Der Wärmespeicher 16 ist ebenfalls mit einer Wärmedämmung 13 versehen. In dem Wärmespeicher 16 ist ein Wärmetauscher 25 angeordnet. Der Wärmetauscher 25 ist mit einer elektrischen Heizung 26 versehen. Die elektrische Heizung 26 ist über die elektrische Leitung 24 an die Photovoltaikanlage 22 angeschlossen und wird von ihr mit elektrischem Heizstrom versorgt.

Das in dem externen Wärmespeicher 16 bevorratete Wärmeträgermedium 17 wird von der elektrischen Heizung 26 erwärmt und kann den Verbrauchern 21 in dem Gebäude 10 zugeleitet werden. Zum Ausgleich des entnommenen Brauchwassers kann in den Wärmespeicher 16 über ein mit einem Zulaufventil 27 versehenen Zulauf 28 kaltes Wasser nachgespeist werden.

Um die Füllhöhe in dem Wärmespeicher 16 möglichst konstant zu halten, kann dem Gebäude 10 ein Zwischenspeicher 29 zugeordnet sein. Aus dem zwischengeschalteten Zwischenspeicher 29 können Verbraucher 21 über einen Dreiwegehahn 20 variabel mit warmem oder heißem Brauchwasser versorgt werden.

Um eine Zirkulation des Wärmeträgermediums 17 sicherzustellen, können in der kalten Zuleitung 14 und der warmen Ableitung 15 Rückschlagventile 30 vorgesehen sein. Ebenso kann zur Förderung des Wärmeträgermediums 17 eine Pumpe 31 eingesetzt werden. Die Pumpe 31 kann beispielsweise mit elektrischem Strom aus der Photovoltaikanlage 22 betrieben werden.

Der als Wärmespeicher 16 dienenden Behälter besteht aus Stahlblech. Um Korrosion der Innenwandung des Behälters zu vermeiden, ist der Wärmespeicher 16 mit einer Innenbeschichtung 32 versehen. Die Innenbeschichtung 32 besteht beispielsweise aus einem Kunststoff.

### Bezugszeichen

- 10: Gebäude
- 11: Dachfläche
- 12: Solarabsorber
- 13: Wärmedämmung
- 14: Zuleitung
- 15: Ableitung
- 16: externer Wärmespeicher
- 17: Wärmeträgermedium
- 18: Schlauch
- 19: Schlauchwindung
- 20: Dreiwegehahn
- 21: Verbraucher
- 22: Photovoltaikanlage
- 23: Solarzelle
- 24: elektrische Leitung
- 25: Wärmetauscher
- 26: elektrische Heizung
- 27: Zulaufventil
- 28: Zulauf
- 29: Zwischenspeicher
- 30: Rückschlagventil
- 31: Pumpe
- 32: Innenbeschichtung

## Patentansprüche

1. Dezentraler Wärmespeicher (16) zur Aufnahme von mit Sonnenenergiekollektoren (12, 22) aus Sonnenenergie gesammelter Wärmeenergie, wobei der Wärmespeicher (16) extern aufgestellt ist, die Sonnenenergiekollektoren (12, 22) zur Übertragung der Wärmeenergie mit dem Wärmespeicher (16) leitungsverbunden sind, und der Wärmespeicher (16) ein erdgedeckt aufgestellter Flüssiggastank ist, der an Stelle von Flüssiggas ein liquides Wärmeträgermedium (17) beinhaltet.

2. Wärmespeicher nach Anspruch 1, **dadurch kennzeichnet, dass** das liquide Wärmeträgermedium (17) und Medium zur Übertragung der Wärmeenergie auf den Wärmespeicher (16) Wasser ist.

3. Wärmespeicher nach Anspruch 1, **dadurch kennzeichnet, dass** das Medium zur Übertragung der Wärmeenergie auf den Wärmespeicher (16) elektrischer Strom ist.

4. Wärmespeicher nach den Ansprüchen 1 bis 3, **dadurch gekennzeichnet, dass** der externe Wärmespeicher (16) mit einer Korrosion verhindernden Innenbeschichtung (32) und mit einer Wärmeabstrahlung verzögernden Wärmedämmung (13) versehen ist.

5. Wärmespeicher nach einem oder mehreren der vorangehenden Ansprüche, **dadurch gekennzeichnet, dass** in dem externen Wärmespeicher (16) ein Wärmetauscher (26) angeordnet ist.

6. Wärmespeicher nach einem oder mehreren der vorangehenden Ansprüche, **dadurch gekennzeichnet, dass** dem in dem externen Wärmespeicher (16) angeordneten Wärmetauscher (25) eine elektrische Heizung (26) zugeordnet ist, die mit von einer Photovoltaikanlage (22) erzeugtem Solarstrom betreibbar ist.

7. Wärmespeicher nach einem oder mehreren der vorangehenden Ansprüche, **dadurch gekennzeichnet, dass** dem externen Wärmespeicher (16) ein Zwischenspeicher (29) für Brauchwasser nachgeordnet ist.

8. Wärmespeicher nach einem oder mehreren der vorangehenden Ansprüche, **dadurch gekennzeichnet, dass** zwischen den Sonnenenergiekollektoren (12) und dem, mit diesen leitungsverbundenen, externen Wärmespeicher (16) ein von einer Pumpe (31) gefördertes liquides Wärmeträgermedium (17) zirkuliert.

9. Wärmespeicher nach einem oder mehreren der vorangehenden Ansprüche, **dadurch gekennzeichnet, dass** das liquide Wärmeträgermedium (17) zwischen den Sonnenenergiekollektoren (12), dem externen Wärmespeicher (16) und einem Verbraucher (21) über eine warme Zuleitung (14) und eine kalte Ableitung (15) über Rückschlagventile (30) in einem geschlossenen Kreislauf zirkuliert.

10. Verwendung eines an sich bekannten erdgedeckten Druckbehälters für die Lagerung von Flüssiggas als externer Wärmespeicher (16), der an Stelle von Flüssiggas ein liquides Wärmeträgermedium (17) beinhaltet, der Wärmespeicher (16) mit Sonnenenergiekollektoren (12, 22) leitungsverbundenen ist und die von den Sonnenenergiekollektoren (12, 22) gesammelte Sonnenenergie in dem Wärmespeicher (16) extern gespeichert wird.
